# EUROPEAN PATENT APPLICATION

(11) **EP 2 151 574 A2**
(43) Date of publication of application: **10.02.2010**
(21) Application number: 09166576.0
(22) Date of filing: 28.07.2009
(51) Int. Cl.: F03D 9/02, F03D 11/00, F03D 11/02

(54) **Wind turbine system**

(30) Priority: 08.08.2008 US 87423 P; 24.03.2009 US 409909
(71) Applicant: General Electric Company, Schenectady, NY 12345 (US)
(72) Inventor: Nies, Jacob Johannes, 8042 HA, Zwolle (NL)
(74) Representative: Bedford, Grant Richard

(57) **Abstract**

A wind turbine to convert wind energy into electricity by a positive displacement hydraulic pump (300) is disclosed. The hydraulic pump (300) is disposed adjacent a shaft (312) coupled to a hub (110). In one embodiment, the rotation of the hub (110) drives the hydraulic pump (300). In another embodiment, the hub (110) rotates the shaft (312) to drive the hydraulic pump (300).

## Description

The present disclosure is directed to a wind turbine system and, more particularly, to a wind turbine system that includes a hydraulic system for the storage of captured wind energy.

Recently, wind turbines have received increased attention as an environmentally safe and a relatively inexpensive alternative energy source. With this growing interest, considerable efforts have been made to develop wind turbines that are reliable and efficient.

Wind turbines use wind energy to generate electricity. A conventional wind turbine includes wind driven turbine blades connected to a rotor mounted on a tower or platform. The rotor may turn up to about 60 rpm in a steady wind of about 20 mph. The rotor is typically connected to a generator through a transmission. Typical generators include synchronous or asynchronous generators and require a constant input shaft speed of about 1200 to about 1800 rpm to produce power. Although variable speed generators are available, the power output of a variable speed generator must be conditioned before it can be fed into a utility power grid. Low wind conditions can cause interruptions in electricity generation by wind turbines. For example, such conditions can cause a significant decrease in the quality of the electricity being generated.

What is needed is a wind turbine system that offers an efficient transmission combined with a potential reduction in the duration or frequency of interruptions in the generation of grid-quality electricity caused by temporary low wind conditions.

One object of the present disclosure is to provide a wind turbine having a hydraulic pump that provides pressurized fluid to a motor to generate electricity.

According to a first embodiment of the disclosure, a wind turbine system is disclosed that includes a hub, a shaft coupled to the hub, and a hydraulic pump disposed proximate the shaft and configured to provide a pressurized fluid to a motor.

According to a second embodiment of the disclosure, a method of generating electricity from wind power is disclosed that includes rotating a hub by wind energy, driving a pump disposed around a shaft coupled to the hub by rotating the hub to pressurize a fluid, and driving a motor with the pressurized fluid to generate electricity.

Further aspects of the method and system are disclosed herein. The features as discussed above, as well as other features and advantages of the present disclosure will be appreciated and understood by those skilled in the art from the following detailed description and drawings, in which:.

Fig. 1 is a schematic side view of a wind turbine.

Fig. 2 is a schematic illustration of an exemplary embodiment of a wind turbine power generation system according to the disclosure.

Fig. 3 is a schematic illustration of an exemplary embodiment of the pumping subsystem shown in Fig. 2.

Fig. 4A is a partial sectional view of an exemplary pump and rotor shaft arrangement according to the disclosure.

Fig. 4B is a partial sectional view of another exemplary pump and rotor shaft arrangement according to the disclosure.

Fig. 4C is a partial sectional view of yet another exemplary pump and rotor shaft arrangement according to the disclosure.

Fig. 4D is a partial sectional view of yet another exemplary pump and rotor shaft arrangement according to the disclosure.

Fig. 4E is a partial sectional view of yet another exemplary pump and rotor shaft arrangement according to the disclosure.

Fig. 4F is a partial sectional view of yet another exemplary pump and rotor shaft arrangement according to the disclosure.

Wherever possible, the same reference numbers will be used throughout the drawings to refer to the same or like parts.

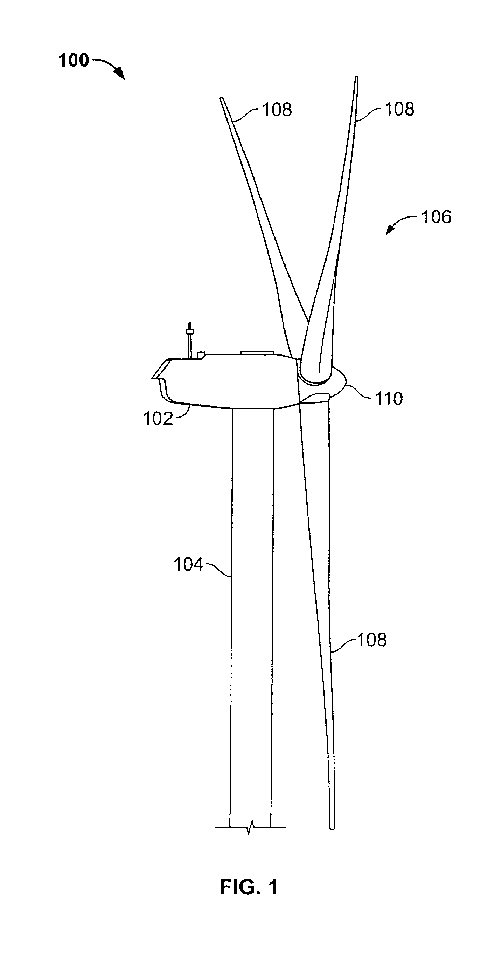

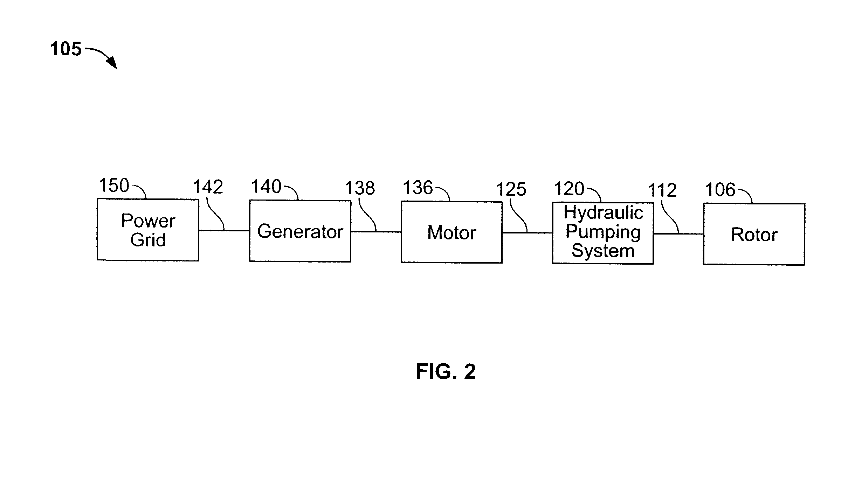

Fig. 1 shows an exemplary wind turbine 100 according to the disclosure. The wind turbine 100 includes a nacelle 102 mounted atop a tower 104 and a rotor 106. The nacelle 102 houses a wind turbine power generation system 105 (Fig. 2) for converting wind energy captured by the rotor 106 to electricity. The nacelle 102 may further house other equipment for controlling and operating the wind turbine 100. The rotor 106 includes rotor blades 108 attached to a rotating hub 110. The rotating hub 110 is connected to the wind turbine power generation system and configured to provide mechanical energy thereto. In this exemplary embodiment, the wind turbine 100 includes three rotor blades 108. In another embodiment, the wind turbine may contain one or more rotor blades 108. The height of the tower 104 is selected on the basis of factors and conditions known in the art, and may extend to heights up to 60 meters or more. The wind turbine 100 may be installed on any terrain providing access to areas having desirable wind conditions. The terrain may vary greatly and may include, but is not limited to, mountainous terrain or offshore locations.

In some configurations and referring to Fig. 2, an exemplary schematic configuration of the wind turbine power generation system 105 housed in nacelle 102 (Fig. 1) is shown. As can be seen in Fig. 2, the rotor 106 is coupled by a shaft 112 to a hydraulic pumping system 120. A hydraulic pumping system 120 that may be incorporated is further disclosed in U.S. Patent Application 12/265,824, filed November 6, 2008, which is hereby incorporated by reference in its entirety.

The rotation of the rotor 106 rotationally drives shaft 112 to provide mechanical energy to hydraulic pumping system 120 to circulate high pressure hydraulic fluid within the hydraulic pumping system 120. The hydraulic pumping system 120 is coupled to a motor 136 via a hydraulic fluid circulation system 125. The motor 136 converts energy from the circulating high pressure fluid into mechanical energy. The motor 136 may be any hydraulic motor suitable for this purpose that is known in the art. The motor 136 is coupled by a transfer device 138 to a generator 140. The motor 136 includes a third sensor 141 for providing motor operational data to the power generation system 105. The transfer device 138 may be a shaft. The generator 140 converts the mechanical energy into electricity. The generator 140 provides the generated electricity to a power grid 150 via a transmission line 142. In another embodiment, the motor 136 and generator 140 may be combined in a single device.

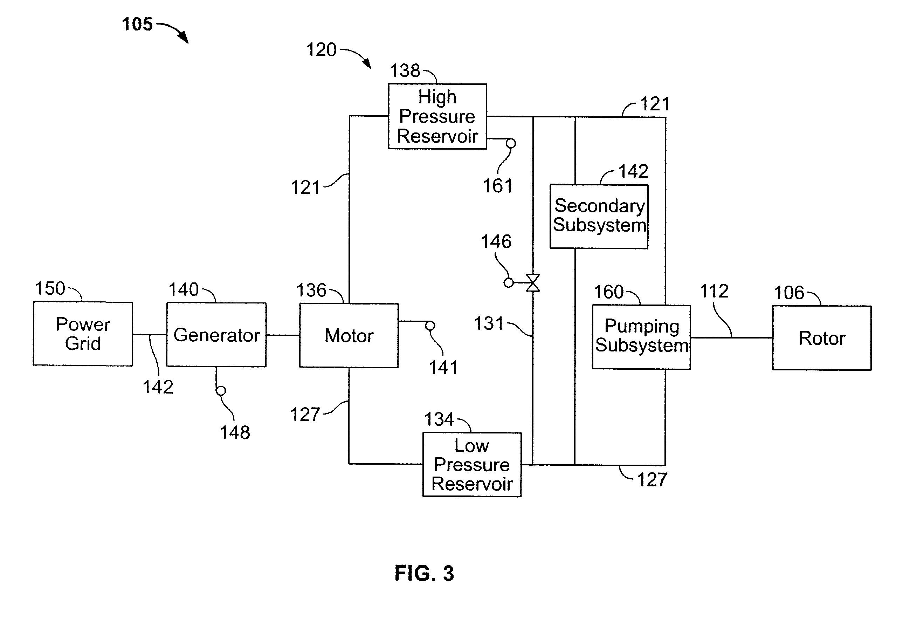

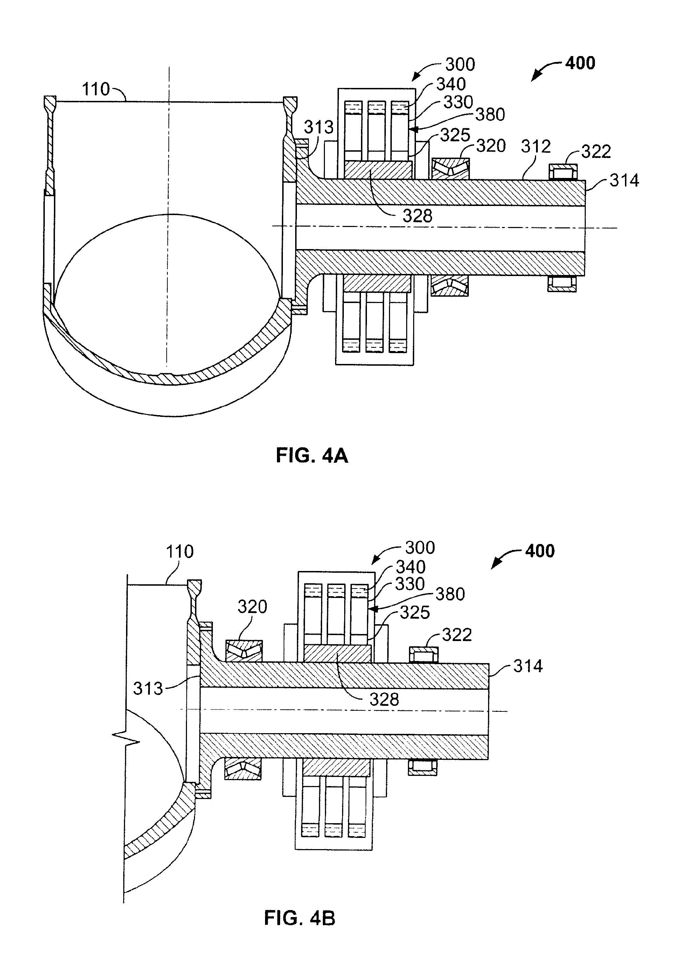

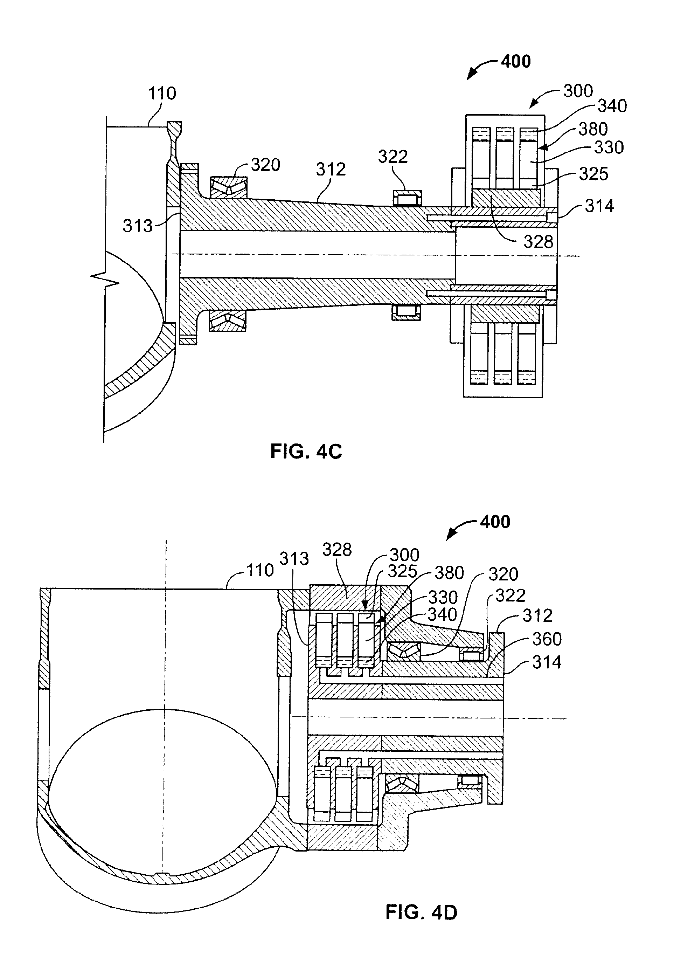

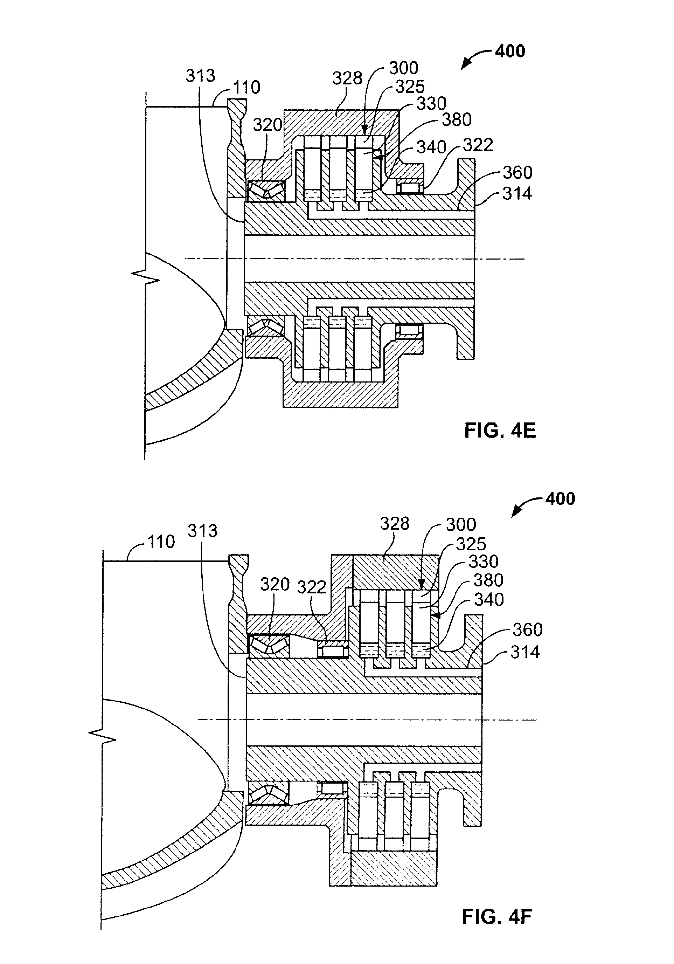

Fig. 3 shows an exemplary arrangement of more detailed schematic of the hydraulic pumping system 120. As can be seen in Fig. 3, the hydraulic pumping system 120 includes a pumping subsystem 160, a high pressure reservoir 138, and a low pressure reservoir 134. The pumping subsystem 160 includes a hydraulic pump 300 (Fig. 4) that is driven by shaft 112 to provide a high pressure fluid through a high pressure fluid line 121 to motor 136. The fluid, which is now a low pressure fluid after having some energy removed by the motor 136, is returned to the pumping subsystem 160 via a low pressure fluid line 127 in fluid communication with low pressure fluid reservoir 134.

The hydraulic pumping system 120 further includes a secondary subsystem 142 in fluid communication between the high pressure fluid line 121 and the low pressure fluid line 127. The secondary subsystem 142 performs one or more secondary functions. Secondary functions refers to functions served by the high-pressure flow of operating fluid that are indirectly related to the generation of electricity, *i.e.*, functions that do not require the flow of such fluid to the generator 140. For example, the high-pressure flow of operating fluid in the secondary subsystem 142 can be used to lubricate bearings and/or the shaft 112. In this exemplary embodiment, the hydraulic pumping system 120 includes one secondary subsystem 142, however, in another embodiment, the hydraulic pumping system 120 may include one or more secondary subsystems 142. In yet another embodiment, the hydraulic pumping system 120 may have the secondary subsystem 142 omitted.

The hydraulic pumping system 120 additionally includes a first flow-control device 146 that adjusts the flow of high-pressure operating fluid from the pumping subsystem 160 among the high-pressure reservoir 138 and the secondary subsystem 142 by controlling the flow through a by-pass line 131. Additionally, the first flow-control device 146 is able to control flow from the pumping subsystem 160 within the predetermined operation parameters and/or thresholds, which can vary depending on the application. The hydraulic pumping system 120 may include other flow-control devices (not shown) to control flow within the hydraulic pumping system 120. For example, a second flow control device (not shown) may control flow from the high-pressure reservoir 138 to the motor 136. The first flow control device 146, as well as the other flow-control devices, may be valves (*e.g.,* check valves) or other devices known in the art to be suitable for such purposes.

Referring still to Fig. 3, the wind power generation system 125 includes a first sensor 148 and a second sensor 161. The first sensor 148 determines one or more operational parameters (*e.g.,* power output) of the generator and is in communication with a controlling subsystem (not shown). The second sensor 161 senses pressure within the high-pressure reservoir 138, and is in communication with the controlling subsystem. The controlling subsystem may include, but is not limited to, a microprocessor configured with hardware and software to receive and process communications from the first and second sensors 148, 161. The controlling subsystem controls flow through the first flow-control devices 146 and controls the displacement of the pumping subsystem 160 (*e.g.,* varying the displacement of the pumping subsystem 160). One of ordinary skill in the art will appreciate that additional sensors and/or flow-control devices can be added as necessary without departing from the spirit and scope of the invention disclosed herein.

When the generator 140 is being overdriven, which usually results from high wind conditions, the first sensor 161 communicates this occurrence to the controlling subsystem, which determines the appropriate course of action. Such course of action may include (1) decreasing the displacement of the pumping subsystem 160 (in extreme wind conditions, the pumping subsystem 160 can essentially be decoupled from the rotor shaft 112); (2) decreasing any high-pressure flow of operating fluid from the high-pressure reservoir 138 to the motor 136; (3) decreasing the high-pressure flow of operating fluid from the pumping subsystem 160 to the motor 136 and simultaneously increasing the flow of high-pressure operating fluid (from the pumping subsystem 160) to the secondary subsystem 142; (4) decreasing the high-pressure flow of operating fluid from the pumping subsystem 160 to the motor 136 and simultaneously increasing the high-pressure flow of operating fluid (from the pumping subsystem 160) to the high-pressure reservoir 138, provided the second sensor 161 senses that the reservoir 138 still has capacity remaining; or (5) any combination thereof. Any high-pressure flow of operating fluid to the high-pressure reservoir 138 is stored therein, assuming the second flow-control device 146 is in its appropriate state. The high-pressure reservoir 138 provides a reserve of high-pressure operating fluid that can be conducted to the motor 136 to at least partially compensate for pressure loss from the pumping subsystem 160 resulting from low wind conditions or other cause.

When the generator 140 is being underdriven, which usually is the result of low wind conditions, the first sensor 148 communicates this occurrence to the controlling subsystem, which determines the appropriate course of action. Such course of action may include (1) increasing the displacement of the pumping subsystem 160, unless the system is already operating at capacity; (2) increasing the high-pressure flow of operating fluid from the high-pressure reservoir 138 to the motor 136, unless the second sensor 161 senses there is insufficient pressure in the high-pressure reservoir 138 for such action; (3) decreasing in whole or in part any high-pressure flow of operating fluid to the secondary subsystem 142 and increasing high-pressure flow to the motor 136; or (4) any combination thereof.

Fig. 4A shows a partial sectional view of an exemplary embodiment of a pump arrangement 400 according to the disclosure. In this embodiment, the arrangement 400 includes a pump 300 disposed adjacent a rotor shaft 312. The shaft has a front end 313 and a rear end 314. The front end 313 is proximate hub 110. The pump 300 is positioned between a first bearing 320 and hub 110 that rotabably support the shaft 312. The arrangement 400 may further include a second bearing 322. The first bearing 320 is positioned closer to rotating hub 110 than the second bearing 322. The shaft 312 includes at least one cam 328. The at least one cam 328 may be provided with one or more lobes or changes in cam thickness to provide a cycling action to at least one pump head 325 as the cam rotates with the rotor shaft 312. The at least one cam 328 urges the at least one pump head 325 towards at least one piston 330 within at least one cylinder 360 to pressurize a fluid 340 when the rotor shaft 312 rotates. The pressurized fluid 340 is collected by a high pressure fluid collection line (not shown). In this exemplary embodiment, the pump 300 includes three cylinders 330 with corresponding pump heads 325. In another embodiment, the pump 300 may include one or more cylinders 330 with one or more corresponding pump heads 325.

The first and second sets of bearings 320, 322 are supported by an internal frame (not shown) of the nacelle 102 (Fig. 1), as are the pump heads 325. Also, although the rotor shaft 312 shown in FIG. 2 is hollow, the disclosure is not so limited. Similarly, there are no rigid requirements concerning the arrangement or number of sets of bearings. For example, it may be advantageous in some applications to have bearings on one side of the pump head 325.

The pump head 325 may further include cylinder deactivation or other fluid displacement-changing technology, thereby providing the pumping subsystem 160 (Fig. 3) with the capability to vary displacement by partially deactivating (or activating) one or more cylinders. However, other variable displacement technology known to one of ordinary skill in the art may be used in addition to, or in place of, cylinder deactivation technology. For example, in some applications, it may be advantageous to use a variable positive displacement pump having a swashplate. In pumping subsystems having two (or more) pump heads, desired changes in displacement can also be achieved by activating one or more pump heads 325 (*e.g*., to manage instances of underspeeding, which commonly occur during low wind conditions) or by deactivating one or more pump heads (*e.g.,* to manage instances of overspeeding, which commonly occur during high wind conditions). In instances of very high winds, for example, pump head 325 can be controlled to change the amount of torque from the rotor shaft 312 by deactivating or activating some or all of its cylinders 330. This capability reduces the need for pitch-control mechanisms, braking mechanisms, and other costly or high-maintenance components.

Fig. 4B shows a partial sectional view of another exemplary embodiment of a pump arrangement 400 according to the disclosure. In this arrangement 400, the pump 300 is positioned between the first bearing 320 and the second bearing 322. Fig. 4C shows yet another exemplary embodiment of a pump arrangement 400 according to the disclosure. In this arrangement 400, the pump 300 is positioned between the second bearing 322 and the shaft rear end 314.

Fig. 4D shows yet another exemplary embodiment of an arrangement 400 according to the disclosure. In this embodiment, unlike the embodiment shown in Figs. 4A-C, the shaft 312 is stationary. The shaft 312 is supported by an internal frame (not shown) of the nacelle 102 (see Fig. 1). The pump 300 is positioned between the first bearing 320 and hub 110. In this embodiment, the pump head 325 is oriented such that the pistons 330 drive the operating fluid 340 toward the major center axis of the nacelle 102 and through the center axis of the shaft 312, as opposed to away from such axis as in the embodiments as shown in Figs. 4A-C. As explained more fully hereinafter, such orientation can facilitate the distribution of high-pressure operating fluid 340 throughout the shaft 312. In this exemplary embodiment, the rotating hub 110 rotates shaft components (not shown) that rotate cams 328. As the hub 110 rotates, the cams 328 actuate the pistons 330, increasing the pressure of the operating fluid 340. High-pressure lines 360 within the rotor shaft 312 aid in conducting the high-pressure flow of operating fluid 340 to its destination. Insofar as the high-pressure lines 360 are enclosed in the core of the rotor shaft 312, the high-pressure lines 360 of this embodiment enjoy reduced failure rates and, therefore, require less maintenance. The pump head 325 may optionally includes cylinder deactivation technology, thereby providing this embodiment of the pumping subsystem 160 with the capability to manage instances of overspeeding and underspeeding by deactivating and activating, respectively, as necessary, one or more cylinders 380.

Fig. 4E shows a partial sectional view of another exemplary embodiment of a pump arrangement 400 of a pump 300, rotor shaft 312, first bearing 320 and second bearing 322, and having a stationary rotor shaft 312 according to the disclosure. In this arrangement 400, the pump 300 is positioned between the first bearing 320 and the second bearing 322. Fig. 4F shows yet another exemplary embodiment of a pump arrangement 400 having a stationary rotor shaft 312. In this arrangement 400, the pump 300 is positioned between the second bearing 322 and the shaft rear end 314.

In alternative embodiments, the shaft 312 and pump 300 can be de-coupled by using a flexible coupling (not shown) in order to reduce structural noise. In other words, by having a torsionally flexible element between the cam 328 and shaft 312.

In another embodiment, the pump 300 may be coupled to the shaft 312 by a pump shaft (not shown). In this arrangement, the pump 300 may be mounted on a baseframe (not shown) of the nacelle 102 (Fig. 1) directly, which allows for rigid connections to the other pressurized components that may be integrated in and/or on the baseframe. Alternatively, the pump 300, motor 136 and other hydraulic ancillaries may be mounted on a flexibly mounted skid (not shown).

Depending on the arrangement of valves (not shown) within the pump 300, in some embodiments, it may be beneficial to include a connection to disconnect the torque arms (not shown). In another embodiment, the pump 300 and/or motor 136 may be place at an angular direction relative to vertical in order to not drain the pump 300 during select operating conditions. This results in a reduction of leakage in the pump 300.

In yet another embodiment, more than one cylinders 380 may be de-activated in low power applications, both in the pump 300 and the motor 136. The activation/deactivation may be performed by pressurizing the pistons 330 to top dead center (TDC) by oil. It may also be done by applying a lower than atmospheric pressure to the cylinders 380 by applying a lower than atmospheric pressure to the high pressure lines 360, or by applying the lower than atmospheric pressure directly to the pump 300.

In another embodiment, accumulator cavities (not shown) may be used to store oil temporarily if a complete drainage of the pump 300 or motor 136 cannot be avoided. In this situation, the accumulators may not necessarily be depressurized. In some circumstances, the accumulators may only be partially depressurized to the extent needed to not let the compressed air reach too high of a pressure. Alternatively, fluid bags may be used to temporarily store oil.

Ancillary components (not shown) such as accumulators, circulation and supply pumps, valves, filters and pipes can be disposed in the baseframe construction, the pump 300 or the motor 136.

In another embodiment, a multi-bay system (not shown) or separated cylinders 380 can be re-routed in order to avoid the use of piston accumulators and to have free surface separation. In this embodiment, the cylinders 380 may have dual exhaust ports (not shown). This can be done from cylinders 380 providing overcapacity, or from the shift of operating point pressure delivery. The elimination of bladders and/or pistons also facilitates the usage of the accumulators for maintenance drain functions.

Any interface of oil and air in the hydraulic pumping system 120 will give transport of air into the oil and oil into the air. In order to remove air from oil in the, a compressor may be used to bring it into an accumulator (not shown) for removal. In one embodiment, this may be performed at a pressure under 250 bar. In another embodiment, this may be performed at a pressure greater than 250 bar. After emptying any low pressure void created by the air, a particular accumulator part may be repressurized.

A source for potential conversion losses in the hydraulic pumping system 120 is the compressibility of the fluid and the flexibility of the pumps 300. Additionally, the performance of the hydraulic pumping system 120 may be enhanced by controlling the dispersion of air in oil. For example, the dispersion of air in oil may be reduced by immersing all moving parts in oil so no free surfaces exist, using a centrifuge (not shown) to extract air from oil, by locally dropping the pressure in the oil to evaporate water and ease separation of air from the oil, and by any combination thereof. In another embodiment, oil may be passed through two pumps 300 in sequence and having the second pump 300 have a bigger volume-flow per revolution compared to the first pump 300. In this manner, the oil between the pumps 300 will be at a low pressure or at vacuum. The low pressure or vacuum may have to be maintained by taking out evaporated air, and additional oil may have to be added by letting high pressure oil bleed in.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the preferred mode contemplated for carrying out this invention, but that the invention will include all embodiments falling within the scope of the appended claims.

Various aspects and embodiments of the present invention are defined by the following numbered clauses:
1. A wind turbine system, comprising:
   a hub;
   a shaft coupled to the hub; and
   a hydraulic pump disposed adjacent the shaft and configured to provide a pressurized fluid to a motor.
2. The wind turbine system of clause 1, wherein the hub is configured to drive the pump, and the shaft is stationary.
3. The wind turbine system of any preceding clause, wherein the hub rotates the shaft to drive the pump.
4. The wind turbine system of any preceding clause, further comprising a first bearing rotatably supporting the shaft, and wherein the pump is located between the first bearing and the hub.
5. The wind turbine system of any preceding clause, further comprising a first bearing and a second bearing rotatably supporting the shaft, and wherein the first bearing is located proximate the hub and the pump is located between the first bearing and the second bearing.
6. The wind turbine system of any preceding clause, further comprising a first bearing and a second bearing rotatably supporting the shaft having a front end and a rear end, and wherein the first bearing is located proximate the front end proximate the hub and the pump is located between the second bearing and the rear end.
7. The wind turbine system of any preceding clause, further comprising a first bearing rotatably supporting the shaft, and wherein the pump is located between the first bearing and the hub.
8. The wind turbine system of any preceding clause, further comprising a first bearing and a second bearing rotatably supporting the shaft, and wherein the first bearing is located proximate the hub and the pump is located between the first bearing and the second bearing.
9. The wind turbine system of any preceding clause, further comprising a first bearing and a second bearing rotatably supporting the shaft, and wherein the first bearing is located proximate the hub and the pump is located after the second bearing.
10. A method of generating electricity from wind power, comprising:
   rotating a hub by wind energy;
   driving a pump located proximate a shaft coupled to the hub by rotating the hub to pressurize a fluid; and
   driving a motor with the pressurized fluid to generate electricity.
11. The method of clause 10, wherein the hub is configured to drive the pump and the shaft is stationary.
12. The method of clause 10 or 11, wherein the hub rotates the shaft to drive the pump.
13. The method of any one of clauses 10 to 12 to, further comprising a first bearing rotatably supporting the shaft, and wherein the pump is located between the first bearing and the hub.
14. The method of any of clauses 10 to 13, further comprising a first bearing and a second bearing rotatably supporting the shaft, and wherein the first bearing is located proximate the hub and the pump is located between the first bearing and the second bearing.
15. The method of any of clauses 10 to 14, further comprising a first bearing and a second bearing rotatably supporting the shaft, and wherein the first bearing is located proximate the hub and the pump is located after the second bearing.
16. The method of any of clauses 10 to 15, further comprising a first bearing rotatably supporting the shaft, and wherein the pump is located between the first bearing and the hub.
17. The method of any of clauses 10 to 16, further comprising a first bearing and a second bearing rotatably supporting the shaft, and wherein the first bearing is located proximate the hub and the pump is located between the first bearing and the second bearing.
18. The method of any of clauses 10 to 17, further comprising a first bearing and a second bearing rotatably supporting the shaft, and wherein the first bearing is located proximate the hub and the pump is located after the second bearing.

## Claims

1. A wind turbine system (100), comprising:
a hub (110);
a shaft (112) coupled to the hub; and
a hydraulic pump (120) disposed adjacent the shaft (112) and configured to provide a pressurized fluid to a motor (136).

2. The wind turbine system (100) of claim 1, wherein the hydraulic pump (120) is directly driven by the shaft (112).

3. The wind turbine system (100) of any preceding claim, wherein the hub (110) is configured to drive the pump (120), and the shaft (112) is stationary.

4. The wind turbine system (100) of any preceding claim, wherein the hub (110) rotates the shaft (112) to drive the pump (120).

5. The wind turbine system (100) of any preceding claim, further comprising a first bearing (320) rotatably supporting the shaft (112), and wherein the pump (120) is located between the first bearing (320) and the hub (110).

6. The wind turbine system (100) of any preceding claim, further comprising a first bearing (320) and a second bearing (322) rotatably supporting the shaft (112), and wherein the first bearing (320) is located proximate the hub (110) and the pump (120) is located between the first bearing (320) and the second bearing (322).

7. The wind turbine system (100) of any preceding claim, further comprising a first bearing (320) and a second bearing (322) rotatably supporting the shaft (112) having a front end (313) and a rear end (314), and wherein the first bearing (320) is located proximate the front end (313) proximate the hub (110) and the pump (120) is located between the second bearing (322) and the rear end (314).

8. The wind turbine system (100) of any preceding claim, further comprising a first bearing (320) rotatably supporting the shaft (112), and wherein the pump (120) is located between the first bearing (320) and the hub (110).

9. The wind turbine system (100) of any preceding claim, further comprising a first bearing (320) and a second bearing (322) rotatably supporting the shaft (112), and wherein the first bearing (320) is located proximate the hub (110) and the pump (120) is located between the first bearing (320) and the second bearing (322).

10. The wind turbine system (100) of any preceding claim, further comprising a first bearing (320) and a second bearing (322) rotatably supporting the shaft (112), and wherein the first bearing (320) is located proximate the hub (110) and the pump (120) is located after the second bearing (322).
